# EUROPEAN PATENT APPLICATION

(11) **EP 4 241 914 A1**
(43) Date of publication of application: **13.09.2023**
(21) Application number: 21962090.3
(22) Date of filing: 09.11.2021
(51) Int. Cl.: B23K 26/38

(54) **LASER CUTTING HEAD HAVING VARIABLE SPOT TRAJECTORY SHAPE AND CUTTING PROCESS THEREFOR**

(30) Priority: 29.10.2021 CN 202111266435
(71) Applicant: Jinan Bodor CNC Machine Co., Ltd., Jinan, Shandong 250100 (CN)
(72) Inventor: YANG, Xuguang, Jinan, Shandong 250100 (CN); ZHANG, Chengshun, Jinan, Shandong 250100 (CN); CHEN, Chuanming, Jinan, Shandong 250100 (CN); ZHANG, Qinming, Jinan, Shandong 250100 (CN); NIU, Mandun, Jinan, Shandong 250100 (CN); MA, Chi, Jinan, Shandong 250100 (CN); JIA, Wenqi, Jinan, Shandong 250100 (CN); LI, Wei, Jinan, Shandong 250100 (CN); ZHANG, Yongze, Jinan, Shandong 250100 (CN)
(74) Representative: Huang, Liwei
(86) International application number: PCT/CN2021/129595
(87) International publication number: WO 2023/070744

(57) **Abstract**

The present application provides a laser cutting head having a variable spot trajectory shape, and a cutting process, relating to the field of laser cutting processing. A technical solution thereof is: a laser cutting head having a variable spot trajectory shape, comprising a beam shaper, a trajectory control assembly, and a focusing assembly arranged in sequence along an optical path direction; the trajectory control assembly comprises a reflector, an X-axis galvanometer, and a Y-axis galvanometer, a rotational axis of the X-axis galvanometer being a vertical axis, a rotational axis of the Y-axis galvanometer being a horizontal axis, a reflective surface of the reflector being opposite to a reflective surface of the X-axis galvanometer, and a reflection surface of the Y-axis galvanometer being opposite to the reflection surface of the X-axis galvanometer. The beneficial effects of the present invention are, by means of controlling a swing of an X-axis galvanometer and a Y-axis galvanometer, during a process in which a main body of a laser head moves to perform laser cutting, the light spot is controlled to perform cyclically reciprocating motion in a horizontal plane, so that the laser at a current power can achieve high-power cutting effects and speed, reducing production and procurement costs.

## Description

### Field

The present application relates to the field of laser cutting processing, in particular to a laser cutting head having a variable spot trajectory shape, and a cutting process.

The present application claims priority to a Chinese patent application No. 202111266435.7 filed with the CNIPA on October 29, 2021 and entitled "LASER CUTTING HEAD HAVING VARIABLE SPOT TRAJECTORY SHAPE AND CUTTING PROCESS THEREFOR", the entire contents of which are incorporated herein by reference.

### Background

Laser cutting is to irradiate a metal sheet with a focused high-power-density laser beam to enable the metal sheet to rapidly melt, vaporize, ablate or reach an ignition point, and meanwhile blow away a molten substance by means of high-speed gas flow coaxial with the beam to implement cutting of the metal sheet. Compared with methods such as a plasma cutting method, a flame cutting method and a wire-electrode cutting method, the laser cutting method has the advantages that a heat affected zone is small, the cutting speed is fast, the cutting quality is high and the like, and is widely applied in metal sheet cutting processing rapidly. Moreover, the laser cutting has a higher requirement on the cutting accuracy of the beam, such as 0.1 mm, and a slit, timely discharge of molten metal and the like need to be considered in laser cutting, and otherwise there will be a problem such as hole blasting or impenetrability.

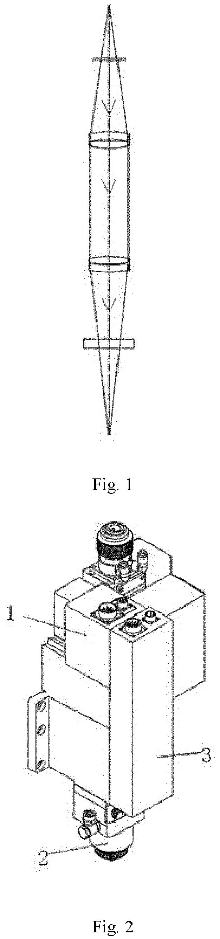

With a change in market demand, a conventional technology has a gradually increased requirement on a laser cutting machine, and it is hoped that faster cutting speed, a better cut surface and a larger cutting thickness can be realized by devices with the same power, without purchasing a new machine. If a longer-focal-length focusing lens is used to enlarge a focused spot to obtain a wider slit, laser energy density near a focus will be decreased, which reduces cutting efficiency, or a laser divergence angle will be decreased, which results in that a difference between spot sizes at sheet thicknesses on two sides of the focus and a spot size at the focus is relatively small, such that requirements of wider slits at all thicknesses cannot be met. An optical path structure of a current laser cutting head is as shown in Fig. 1, and a spot after a beam emitted from a laser source is output by structures such as a collimating lens, a focusing lens can only do basic vertical movement, but cannot change in an in-plane direction, so that its cutting speed, cutting thickness, and cut surface are limited.

### Summary

According to various embodiments of the present application, the present application provides a laser cutting head having a variable spot trajectory shape that can change the spot trajectory shape while a laser cutting head moves, to improve the cutting capacity.

The technical solution adopted in the present application is as follows: a laser cutting head having a variable spot trajectory shape includes a beam shaper, a trajectory control assembly, a focusing assembly and a nozzle that are successively arranged in an optical path direction, wherein the trajectory control assembly includes an X-axis galvanometer and a Y-axis galvanometer, the rotation axis of the X-axis galvanometer is a vertical axis, the rotation axis of the Y-axis galvanometer is a horizontal axis, and a reflection surface of the Y-axis galvanometer is opposite to a reflection surface of the X-axis galvanometer. In the trajectory control assembly, a laser is transferred between the X-axis galvanometer and the Y-axis galvanometer, and a spot is controlled to do cyclic reciprocating movement in a horizontal plane according to a set pattern, by controlling swing of the X-axis galvanometer and the Y-axis galvanometer, in a process that a laser cutting head main body moves to perform laser cutting, so that a laser device of existing power can achieve a cutting effect and speed of a higher-power device, and purchase costs are reduced; a modular design is adopted, which is convenient for assembly and reduces interference.

In one embodiment, the trajectory control assembly includes a mounting base, the mounting base is of an internal hollow structure, an X-axis galvanometer assembly and a Y-axis galvanometer assembly are mounted on the mounting base, the X-axis galvanometer assembly includes an X-axis motor, the X-axis galvanometer is mounted on an output shaft of the X-axis motor, and the X-axis galvanometer is located inside the mounting base; the Y-axis galvanometer assembly includes a Y-axis motor, the Y-axis galvanometer is mounted on an output shaft of the Y-axis motor, and the Y-axis galvanometer is located in the mounting base. The X-axis galvanometer assembly and the Y-axis galvanometer assembly each further include a motor frame, the motor frame includes a fixed block, one side of the fixed block is provided with a movable block, the fixed block and the movable block are connected by bolts, the motor is mounted between the fixed block and the movable block, a motor cooling assembly is arranged in the fixed block, and a tail of the motor is further provided with a tail guard. The galvanometers are controlled by the motors, and thus, the galvanometers can better cooperate with a control program to implement more precise trajectory control; the motors are securely mounted and are convenient to detach and mount.

In an embodiment, the trajectory control assembly further includes a reflecting lens, the reflecting lens is located in front of the X-axis galvanometer and the Y-axis galvanometer is located behind the X-axis galvanometer in the optical path direction, and the reflecting lens is mounted inside the mounting base. A laser emitted from a laser source impinges on the reflecting lens, the reflecting lens reflects the laser onto the X-axis galvanometer, the X-axis galvanometer reflects the laser to the Y-axis galvanometer again, and the Y-axis galvanometer outputs the laser to a next assembly.

In another embodiment, the trajectory control assembly further includes a reflecting lens, and in the optical path direction, the Y-axis galvanometer is located in front of the X-axis galvanometer, and the reflecting lens is located behind the X-axis galvanometer. A laser emitted from a laser source impinges on the Y-axis galvanometer, the Y-axis galvanometer reflects the laser onto the X-axis galvanometer, the X-axis galvanometer reflects the laser onto the reflecting lens again, and the reflecting lens reflects the laser to a next assembly.

In one embodiment, the beam shaper is horizontally arranged, and in the optical path direction, the Y-axis galvanometer is located behind the X-axis galvanometer. When the laser source is horizontally arranged, the reflecting lens can be detached from the trajectory control assembly, so that an incident laser is directly projected onto the galvanometers, and the trajectory control assembly has various mounting forms and is more flexible to use.

In an example, the X-axis galvanometer assembly and the Y-axis galvanometer assembly each further include a galvanometer cooling assembly, the galvanometer cooling assembly includes a galvanometer cooling plate, an obverse side of the galvanometer cooling plate is close to a reverse side of a reflection surface of the X-axis galvanometer or the Y-axis galvanometer, the galvanometer cooling plate is provided with a cooling water tank, and the distance between the galvanometer cooling plate and the X-axis galvanometer or the Y-axis galvanometer is 2-10 mm. The cooling assembly can avoid an accuracy decrease caused by the fact that the galvanometer overheats to result in a lens curvature change, and the distance between the cooling plate and the galvanometer is reasonable, such that rotation of the galvanometer cannot be interfered while a cooling effect is guaranteed.

In an example, a limiting plate is arranged in front of or behind the reflection surface of the X-axis galvanometer, a limiting plate is arranged in front of or behind the reflection surface of the Y-axis galvanometer, and when the X-axis galvanometer rotates to preset positions on two sides, the X-axis galvanometer is in contact with two side edges of the limiting plate; when the Y-axis galvanometer rotates to set positions on two sides, the Y-axis galvanometer is in contact with two side edges of the limiting plate, which prevents that unexpected over-rotation of the galvanometer causes that an output laser exceeds a safe range to cause danger.

In a specific example, the distance between the limiting plate and the X-axis galvanometer or the Y-axis galvanometer is m, and m is equal to kl, k is a set coefficient, l is the length of the X-axis galvanometer or the Y-axis galvanometer, and m is 0.5-13.5 mm.

The beam shaper includes a beam filtering assembly and a collimating lens assembly, the beam filtering assembly is located in front of the collimating lens assembly in the optical path direction, and an upper protective lens is mounted on the beam shaper. The beam filtering assembly is used for filtering out stray light of the laser source, and the collimating lens assembly is used for converging a divergent beam into a parallel beam, and when an optical fiber is mounted, the upper protective lens can avoid that dust falls into the laser cutting head.

In one embodiment, a beam passing hole is arranged in the middle of the beam filtering assembly, a tapered beam absorption surface is arranged above the beam passing hole, and a cone angle from a laser exit point of the laser device to the beam passing hole is greater than or equal to a beam divergence angle of the laser device, and a tapered beam absorption surface can also be arranged below the beam passing hole as needed. With this setting, a middle high-energy beam of the beam can pass through the beam passing hole, thereby improving the laser cutting accuracy.

In an example, the collimating lens assembly includes a collimating lens housing and a collimating lens, a coaxiality adjusting part is mounted on the collimating lens housing to guarantee the coaxiality of the output laser beam and the nozzle. A divergent laser in the laser source enters a next assembly in parallel after passing through the collimating lens assembly, and meanwhile, the coaxiality adjusting part is arranged, so that the coaxiality of an optical path is guaranteed by fine adjustment of the position of the collimating lens.

In one embodiment, the focusing assembly includes a focusing lens, a focusing protective lens and a lifting mechanism, the focusing lens is mounted in a lens barrel, a compression spring is arranged on the focusing lens, the compression spring compresses the focusing lens, the lifting mechanism includes a lifting motor, a lead screw is arranged on an output shaft of the lifting motor, a lens assembly mounting base is mounted on the lead screw in a fit manner, the lead screw can drive the lens assembly mounting base to move along the lead screw, the lens barrel is mounted on the lens assembly mounting base, the lower end of the focusing protective lens is provided with a lower protective lens, and a nozzle and a cutting gas passage are further arranged at the lower part of the focusing assembly. Focusing is performed by lifting the focusing lens; meanwhile, the lower protective lens is arranged to prevent reverse slag from damaging the focusing lens; the cutting gas passage sprays out a high-speed gas via the nozzle to blow away molten metal in time.

In an example, a zoom ratio of the focusing assembly to the beam shaper is 1.2-3.5.

Based on the above cutting head, the present application further provides a cutting process, including steps as follows:
S1. determining parameters of a to-be-cut sheet, such as the material and thickness;
S2. setting spot parameters, wherein the spot parameters include a spot trajectory pattern, a spot radius, and a swing frequency or swing speed;
S3. setting cutting parameters, wherein the cutting parameters include a cutting pattern, a cutting height, a cutting focus, cutting speed, cutting gas pressure and the like;
S4. performing calibration, wherein calibration includes coaxiality adjustment, height calibration and cutting range calibration;
S5. cutting the sheet, wherein in a cutting process, a laser cutting head performs cutting according to the set cutting parameters, and meanwhile an X-axis galvanometer and a Y-axis galvanometer cooperate with the spot parameters to make a spot do continuous minor movement; and
S6. completing cutting.

In one embodiment, in S1, a host computer presets material options and thickness options; in S2, the spot trajectory pattern may include an "8" shape, a horseshoe shape, a "∞" shape and an "O" shape.

In an example, the spot parameters and the cutting parameters include at least one of parameters as follows:
When a stainless steel medium or thick sheet is cut, a spot trajectory diameter is 40-160 pixels, a swing frequency is 80-300 Hz, negative focus cutting is adopted, a cutting auxiliary gas is nitrogen or air, and gas pressure is 5-25 bar;
when a carbon steel medium or thick sheet is cut, a spot trajectory diameter is 10-80 pixels, a swing frequency is 100-200 Hz, positive focus cutting is adopted, a cutting auxiliary gas is oxygen, and gas pressure is 0.4-2.8 bar;
when a copper or aluminum medium or thick sheet is cut, a spot trajectory diameter is 40-90 pixels, a swing frequency is 100-300 Hz, negative focus cutting is adopted, a cutting auxiliary gas is nitrogen or air, and gas pressure is 5-25 bar.

An axial movement system of a cutting machine performs cutting according to a set cutting pattern, and meanwhile, the X-axis galvanometer and Y-axis galvanometer swing continuously, and the spot moves according to the set spot parameters through the swing of X-axis galvanometer and Y-axis galvanometer.

In an example, in S4:
The coaxiality adjustment includes: determining the alignability of an input beam by adjusting the position of the collimating lens through the coaxiality adjusting part and/or determining the coaxiality of an output beam and the nozzle by adjusting a deflection angle of the X-axis galvanometer and a deflection angle of the Y-axis galvanometer;
The height calibration includes: controlling the axial movement system of the cutting machine to make the laser cutting head rise to a preset height after touching the to-be-cut sheet for the first time and then descend again, and rise to a limited height of the laser cutting head after touching the sheet again;
The cutting range calibration includes that: the laser cutting head emits a guide laser, the laser cutting head operates along a preset cutting pattern trajectory to confirm whether a to-be-cut pattern completely falls within the sheet or not.

It can be seen from the above technical solutions that the present application has the advantages that the spot trajectory shape can be changed by controlling the X-axis galvanometer and the Y-axis galvanometer, and the spot does the cyclic reciprocating movement in the horizontal plane, and compared with a case where an existing laser beam is static relative to a cutting head mechanical body, and there is no movement trajectory relative to the laser cutting head mechanical body, a highest energy point of the laser in this solution can be well transferred to a to-be-processed region of the sheet, thereby improving the energy utilization rate and cutting efficiency of the laser beam, and greatly increasing a cuttable sheet thickness and cutting speed, so that a laser device of existing power can achieve a cutting effect and speed of a higher-power device, and production and purchase costs are reduced; the laser cutting head has a heat dissipation function, which guarantees long-term operation of the laser cutting head; the laser cutting head is provided with the protective lenses, which prevents damage and contamination to the interior of the laser cutting head; the modular design is adopted as a whole, and the trajectory control assembly has various usage forms, which is convenient for assembly and use; the faster cutting speed can be obtained using the cutting process provided in the present application, and the cuttable sheet thickness is greater at the same power.

### Brief Description of the Drawings

In order to explain the technical solution of the present application more clearly, the drawings that need to be used in the description will be briefly introduced below, obviously, the drawings described below are only some embodiments of the present application, and for those skilled in the art, other drawings can be obtained based on these drawings without creative works.
Fig. 1 is a structural schematic diagram of an optical path of an existing laser cutting head.
Fig. 2 is a first structural schematic diagram of Embodiment I of the present application.
Fig. 3 a second structural schematic diagram of Embodiment I of the present application.
Fig. 4 is a structural schematic diagram of a trajectory control assembly in Embodiment I of the present application.
Fig. 5 is a structural schematic diagram of an X-axis galvanometer assembly and a Y-axis galvanometer assembly in Embodiment I of the present application.
Fig. 6 is a structural schematic diagram of a collimating lens assembly in Embodiment I of the present application.

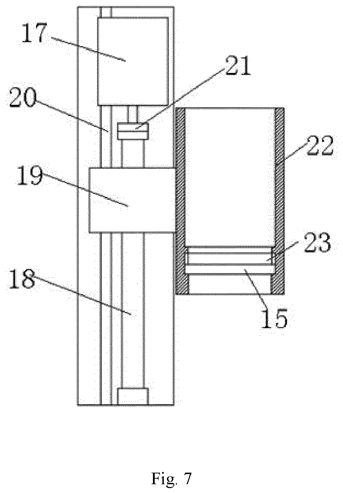

Fig. 7 is a structural schematic diagram of a lifting mechanism in Embodiment I of the present application.
Fig. 8 is a first schematic diagram of an optical path of a laser cutting head in Embodiment I of the present application.
Fig. 9 is a second schematic diagram of an optical path of a laser cutting head in Embodiment I of the present application.
Fig. 10 is a schematic diagram of an optical path of a laser cutting head in Embodiment II of the present application.
Fig. 11 is a schematic diagram of an optical path of a laser cutting head in Embodiment III of the present application.
Fig. 12 is a structural schematic diagram of a cooling assembly in an embodiment of the present application.
Fig. 13 is a schematic diagram of an "8"-shaped spot trajectory of a cutting head of the present application.
Fig. 14 is a flow chart of a cutting process in the present application.

In the figures: 1. Sheet metal housing, 2. Nozzle, 3. Lifting mechanism, 4. Beam shaper, 5. Upper protective lens, 6. Reflecting lens, 7-1. X-axis galvanometer assembly, 7-2.Y-axis galvanometer assembly, 701. Tail guard, 702. Motor cooling assembly, 703. Fixed block, 704. Limiting plate, 705-1. X-axis galvanometer, 705-2. Y-axis galvanometer, 706. Coupling, 707. Movable block, 708-1. X-axis motor, 708-2. Y-axis motor, 8. Lower protective lens, 10. Mounting base, 11. Collimating lens, 12. Collimating lens housing, 13. Adjusting screw, 14. Nut, 15. Focusing lens, 16. Spot trajectory, 17. Lifting motor, 18. Lead screw, 19. Lens assembly mounting base, 20. Guide rail, 21. Lead screw coupling, 22. Lens barrel, 23. Compression spring, 24. Galvanometer cooling plate, 25. Cooling water tank.

### Detailed Description of the Embodiments

In order to make the objectives, features, and advantages of the present application more obvious and understandable, the technical solutions of the present disclosure will be described below clearly and completely in combination with the accompanying drawings in this specific embodiment. Obviously, embodiments described below are only a part of the embodiments of the present disclosure, not all the embodiments thereof. Based on the embodiments in this patent, all other embodiments obtained by those of ordinary skill in the art without creative works shall fall within the scope of protection of this patent.

### Embodiment I

As shown in Figs. 2-6, a laser cutting head having a variable spot trajectory shape includes a beam shaper 4, a trajectory control assembly, a focusing assembly and a nozzle that are successively arranged in an optical path direction, wherein the beam shaper 4 includes a beam filtering assembly and a collimating lens assembly, the beam filtering assembly is located in front of the collimating lens assembly in the optical path direction, an upper protective lens 5 is mounted on the beam shaper 4, the upper protective lens 5 is located between the beam filtering assembly and the collimating lens assembly, and a sheet metal housing 1 is arranged outside the trajectory control assembly.

A beam passing hole is arranged in the middle of the beam filtering assembly, a tapered beam absorption surface is arranged above the beam passing hole, a cone angle from the laser exit point of a laser device to the beam passing hole is greater than or equal to a beam divergence angle of the laser device, and a tapered beam absorption surface may also be arranged below the beam passing hole as needed. With this setting, a middle high-energy beam of a beam can pass through the beam passing hole, thereby improving the laser cutting accuracy.

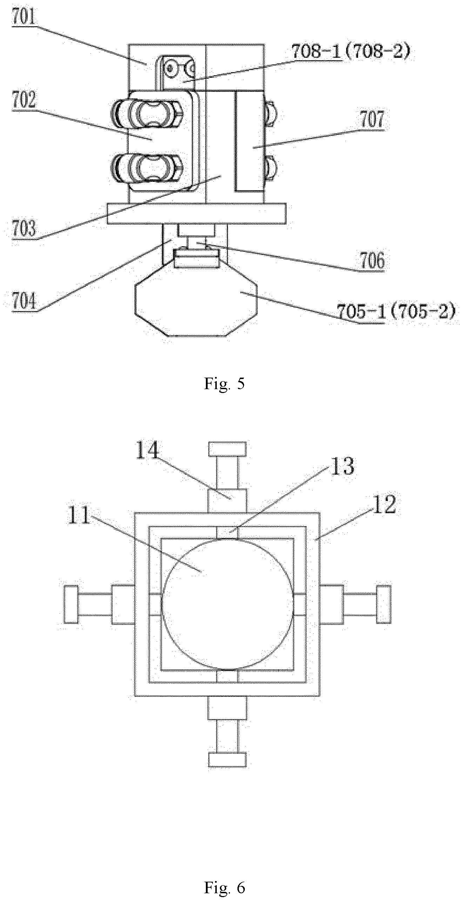

As shown in Fig. 6, the collimating lens assembly includes a collimating lens housing 12 and a collimating lens 11, and a coaxiality adjusting part is mounted on the collimating lens housing 12 to guarantee that a laser beam passes through the center of the nozzle symmetrically so as to guarantee the cutting accuracy and consistency in cutting effect of a cut surface.

In this embodiment, an adjusting screw 13 is adopted as the coaxiality adjusting part, and surrounds the collimating lens 11. In this embodiment, four adjusting screws 13 are provided, and are arranged on four side surfaces of the collimating lens 11, respectively, the adjusting screws 13 penetrate through the collimating lens housing 12, the end of the adjusting screw 13 located inside the collimating lens housing 12 abuts against the side surface of the collimating lens 11, and the end of the adjusting screw 13 located outside the collimating lens housing 12 is provided with a nut 14. During use, the position of the collimating lens 11 is finely adjusted by adjusting the surrounding screws 13, to implement the coaxiality adjustment of the optical path.

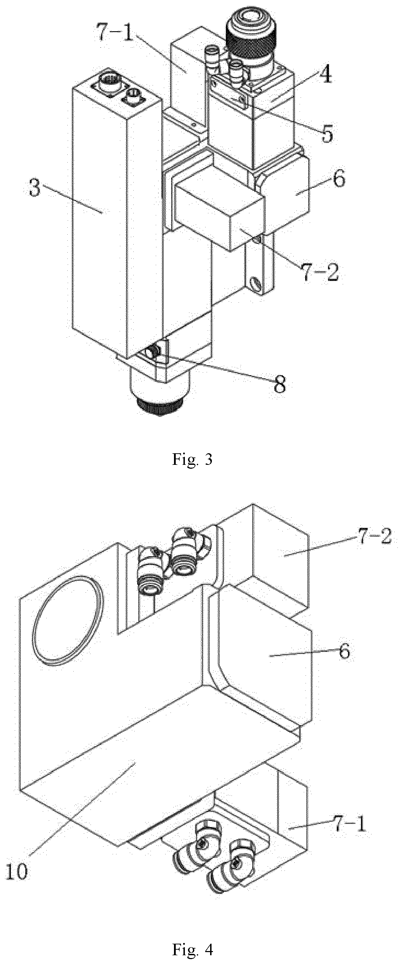

As shown in Fig. 4, the trajectory control assembly includes a mounting base 10, the mounting base 10 is of an internal hollow structure, an X-axis galvanometer assembly 7-1 and a Y-axis galvanometer assembly 7-2 are mounted on the mounting base 10, the structure of the X-axis galvanometer assembly and the structure of the Y-axis galvanometer assembly 7-2 are as shown in Fig. 5, the X-axis galvanometer assembly 7-1 includes an X-axis motor 708-1, and an X-axis galvanometer 705-1 is mounted on an output shaft of the X-axis motor 708-1 through a coupling 706; the Y-axis galvanometer assembly 7-2 includes a Y-axis motor 708-2, and a Y-axis galvanometer 705-2 is mounted on an output shaft of the Y-axis motor 708-2 through a coupling 706.

Limiting plates 704 are arranged in front of or behind the reflection surface of the X-axis galvanometer 705-1 and in front of or behind the reflection surface of the Y-axis galvanometer 705-2, respectively, the distance m between each limiting plate and the corresponding galvanometer is kl, k is a coefficient, l is the length of the galvanometer, and m is generally set to 0.5-13.5 mm. When the X-axis galvanometer 705-1 rotates to a first preset position and a second preset position, the X-axis galvanometer 705-1 is in contact with two side edges of the limiting plate 704, and the first preset position and the second preset position are extreme positions of two ends of an X-axis galvanometer rotation range; similarly, when the Y-axis galvanometer 705-2 rotates to a third preset position and a fourth preset position, the Y-axis galvanometer 705-2 is in contact with the two side edges of the limiting plate 704; the X-axis galvanometer assembly 7-1 and the Y-axis galvanometer assembly 7-2 are both mounted on the mounting base 10, and taking the direction of use (that is, when the output laser of the laser cutting head is vertically downward) as a reference, the X-axis galvanometer assembly 7-1 is mounted vertically, that is, the output shaft of the X-axis motor 708-1 is arranged vertically, and the rotation axis of the X-axis galvanometer 705-1 is a vertical axis, the Y-axis galvanometer assembly 7-2 is mounted horizontally, that is, the output shaft of the Y-axis motor 708-2 is arranged horizontally, the rotation axis of the Y-axis galvanometer 705-2 is a horizontal axis, the X-axis galvanometer 705-1 and the Y-axis galvanometer 705-2 are both located inside the mounting base 10, a reflecting lens 6 is further arranged in the mounting base 10, a reflection surface of the reflecting lens 6 is obliquely upward, and in the optical path direction, the reflecting lens 6 is located in front of the X-axis galvanometer 705-1, the Y-axis galvanometer 705-2 is located behind the X-axis galvanometer 705-1, the reflection surface of the reflecting lens 6 is opposite to the reflection surface of the X-axis galvanometer 705-1, and the reflection surface of the Y-axis galvanometer 705-2 is opposite to the reflection surface of the X-axis galvanometer 705-1.

The first preset position and the second preset position are the extreme positions of two ends of a rotation range of the X-axis galvanometer, and the third preset position and the fourth preset position are extreme positions of two ends of a rotation range of the Y-axis galvanometer. Arrangement of the limiting plates for limiting the rotation ranges of the two galvanometers can avoid that the over-rotation of the galvanometers causes output laser scanning exceeds the safe range.

In the X-axis galvanometer assembly 7-1 and the Y-axis galvanometer assembly 7-2, the motors are each mounted on a motor frame, the motor frame includes a fixed block 703 and a movable block 707, the movable block 707 is located on one side of the fixed block 703, the fixed block 703 and the movable block 707 are connected by bolts, the motor is mounted between the fixed block 703 and the movable block 707, and is clamped and fixed therebetween, a motor cooling assembly 702 is further mounted in the fixed block 703, and the tail of the motor is further provided with a tail guard 701.

The focusing assembly includes a focusing lens 15, a focusing protective lens, and a lifting mechanism 3, the focusing lens 15 is mounted in a lens barrel 22, a compression spring is arranged on the focusing lens 15, the compression spring compresses the focusing lens 15, the lifting mechanism employs a lead screw driven by a motor, and includes a lifting motor 17, a lead screw 18 is arranged on an output shaft of the lifting motor 17, a lens assembly mounting base 19 is mounted on the lead screw 18 in a fit manner, the lead screw 18 can drive the lens assembly mounting base 19 to move along the lead screw 18, the lens barrel is mounted on the lens assembly mounting base 19, the lifting mechanism drives the lens barrel, the focusing lens, and the focusing protective lens to do vertical movement, and the lower end of the focusing protective lens is provided with a lower protective lens. The zoom ratio of the focusing lens to the collimating lens is set to 1.2-3.5.

A nozzle and a cutting gas passage are arranged at the lower part of the focusing assembly, and during laser cutting, the distance between a sprayer of the nozzle and the sheet is set to 0.2-2 mm. A beam output from the focusing assembly exits from the sprayer of the nozzle, after passing through the nozzle, a cutting auxiliary gas of the cutting gas passage becomes a high-speed gas, and the gas blows molten slag generated by cutting to be below the sheet in the cutting process, to prevent the molten slag from adhesion in a molten pool.

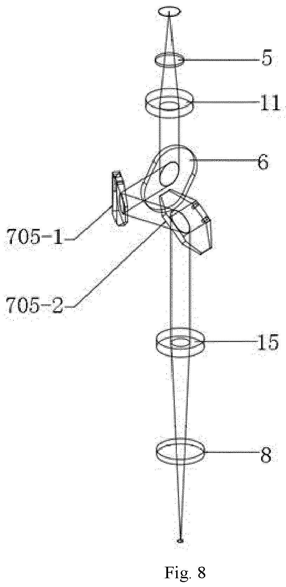

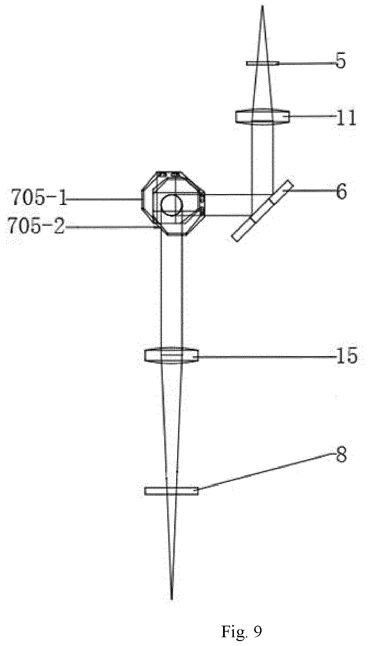

An optical path structure of this embodiment is as shown in Figs. 8 and 9. After passing through the beam filtering assembly to filter out stray light in the optical fiber, the laser beam emitted from the laser source of the cutting machine enters the collimating lens assembly through the upper protective lens, the collimating lens 11 shapes a divergent beam into a parallel beam, the parallel beam impinges on the reflecting lens 6 and is reflected by the reflecting lens 6 onto the X-axis galvanometer 705-1, the X-axis galvanometer 705-1 reflects the beam onto the Y-axis galvanometer 705-2, the Y-axis galvanometer 705-2 reflects the beam downwards again, is focused by the focusing lens 15 and penetrates through the lower protective lens 8 and is output as a cutting laser from the nozzle.

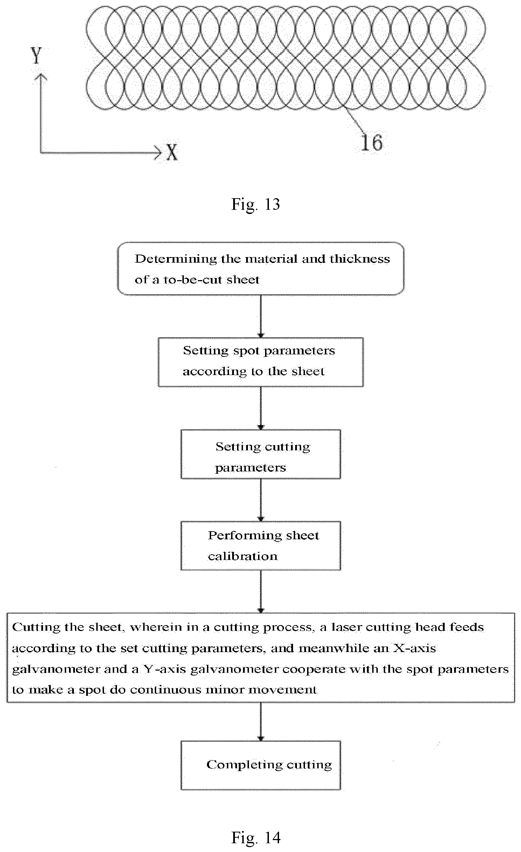

Since the beam is reflected twice by the X-axis galvanometer and the Y-axis galvanometer, the spot of the output laser can move along a predetermined trajectory in the plane through program control by controlling the swing of the two galvanometers. As shown in Fig. 13, in a processing plane, supposed that an X axis shown in the figure is a direction where the laser cutting head operates with the axial movement system of the cutting machine, that is, a current cutting direction, and a Y axis is a direction perpendicular to the X axis, in the cutting process, the X-axis motor drives the X-axis galvanometer to swing at a high speed to make the spot continuously move at a high speed in an X direction, and the Y-axis motor drives the Y-axis galvanometer to swing at a high speed to make the spot continuously move at a high speed in a Y direction; the two directions cooperate, thereby implementing that the spot does continuous "8"-shaped minor movement while doing main movement in the cutting direction, so that there is higher heat on the cutting trajectory, and the cutting width is increased, and thus, a better cut surface can be obtained, and compared with conventional complete linear cutting, the laser cutting has higher cutting efficiency; the laser cutting head can implement the cutting effect of the higher-power device through an existing laser device, thus greatly reducing production costs. In addition, in this design, the optical path of the beam sprayed out from the galvanometer to the sprayer is short, and then when the spot of a predetermined pattern is formed, the swing angle of the galvanometer is large, and the output precision of the motor is high, which further meets the high-precision requirement of the laser cutting.

It should be noted that the "8"-shaped trajectory shown in Fig. 13 is only one cutting mode, and other trajectory shapes such as a horseshoe shape, a "∞" shape and a circular shape can also be implemented by controlling the two galvanometers.

Meanwhile, the X axis and the Y axis are two directions perpendicular to each other in the processing plane, which are set only for the convenience of explanation, and are not limited to an axial movement direction in actual processing, nor refer to the rotation axis direction of the X-axis galvanometer and Y-axis galvanometer.

### Embodiment II

The structure of a laser cutting head of this embodiment is basically the same as that of Embodiment I, with a difference that in a trajectory control assembly of this embodiment, in the optical path direction, a Y-axis galvanometer 705-2 is located in front of an X-axis galvanometer 705-1, a reflecting lens 6 is located behind the X-axis galvanometer 705-1, and the reflection surface of the reflecting lens 6 is arranged obliquely downwards.

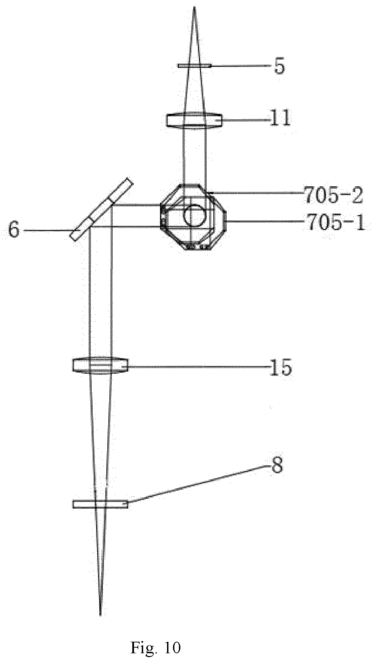

Based on this setting, an optical path structure in this embodiment is as shown in Fig. 10, and after passing through a beam filtering assembly to filter out stray light in an optical fiber, a laser beam emitted from a laser source enters a collimating lens assembly through an upper protective lens, a collimating lens 11 shapes a divergent beam into a parallel beam; the beam impinges on the Y-axis galvanometer 705-2, and is reflected by the Y-axis galvanometer 705-2 onto the X-axis galvanometer 705-1, and the X-axis galvanometer 705-1 reflects the beam onto the reflecting lens 6, the reflecting lens 6 reflects the beam downwards again, is focused by a focusing lens 15 and penetrates through a lower protective lens 8 and is output as a cutting laser from the nozzle. A spot trajectory control principle is the same as that of Embodiment I.

### Embodiment III

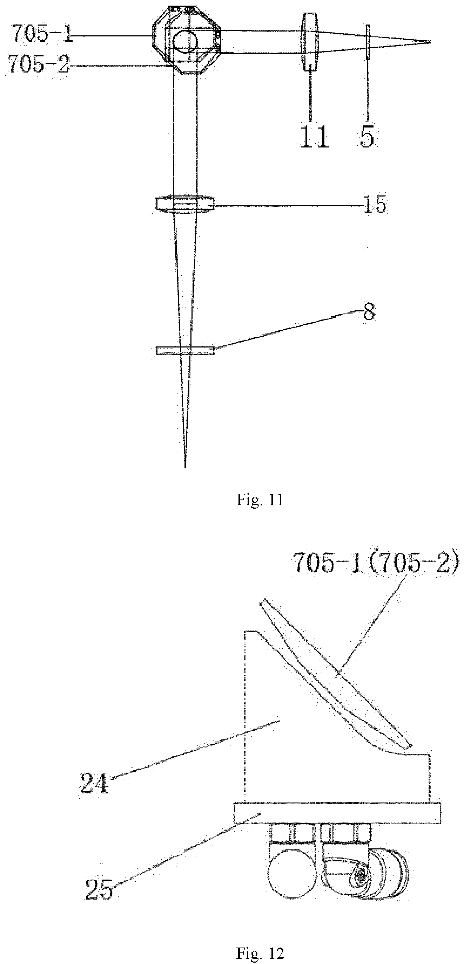

The laser source is adapted to a laser cutting machine with an optical fiber interface arranged horizontally, no reflecting lens is arranged in a trajectory control assembly of this embodiment, and a beam shaper is inserted into the optical fiber interface transversely, the optical path is as shown in Fig. 11, and at this time, the beam processed by the beam shaper is directly projected onto an X-axis galvanometer 705-1, is reflected by the X-axis galvanometer 705-1 to a Y-axis galvanometer 705-2, then is focused by a focusing lens 15 and penetrates through a lower protective lens 8 and is output as a cutting laser from a nozzle. The spot trajectory control principle is the same as Embodiment I.

### Embodiment IV

On the basis of the above three embodiments, an X-axis galvanometer assembly 7-1 and a Y-axis galvanometer assembly 7-2 in this embodiment are each internally provided with a galvanometer cooling assembly. As shown in Fig. 12, the galvanometer cooling assembly includes a galvanometer cooling plate 24, an obverse side of the galvanometer cooling plate 24 is close to a reverse side of the reflection surface of the X-axis galvanometer 705-1 or the Y-axis galvanometer 705-2, a cooling water tank 25 is arranged on the galvanometer cooling plate 24, the distance between the galvanometer cooling plate 24 and the X-axis galvanometer 705-1 or the Y-axis galvanometer 705-2 is 2-10 mm, which guarantees the cooling effect on the premise of not interfering the swing of the galvanometers.

In another aspect, based on the above device and principles, the present disclosure further provides a cutting process, including steps as follows:
S1. determining parameters of a to-be-cut sheet, such as the material and thickness;
S2. setting spot parameters, wherein the spot parameters include a spot trajectory pattern, a spot radius, and a swing frequency or swing speed;
S3. setting cutting parameters, wherein the cutting parameters include a cutting pattern, a cutting height, a cutting focus, cutting speed and cutting gas pressure;
S4. performing calibration, wherein calibration includes coaxiality adjustment, height calibration and cutting range calibration;
S5. cutting the sheet, wherein in a cutting process, a laser cutting head performs cutting according to the set cutting parameters, and meanwhile an X-axis galvanometer and a Y-axis galvanometer cooperate with the spot parameters to make a spot do continuous minor movement; and
S6. completing cutting.

In an example, material options in a host computer include common metal sheet raw materials such as stainless steel and/or carbon steel and/or copper and/or aluminum; thickness options include a thin sheet, a medium sheet, and a thick sheet, and specifically, a sheet that is 1 mm-6 mm thick is the thin sheet, a sheet that is 7 mm-15 mm thick is the medium sheet, and a sheet that is 16mm or above is the thick sheet.

In an example, a to-be-cut sheet is placed on a cutting operation table, a spot trajectory shape is selected from spot trajectory control software and its radius and swing frequency are set, and a cutting height, a cutting focus, cutting speed, and cutting gas pressure are set, to complete parameter setting.

To calibrate the sheet, firstly, the alignability of the input beam is determined by adjusting the position of the collimating lens 11 through the coaxiality adjusting part, and the coaxiality of the output beam and the nozzle is determined by adjusting the deflection angle of the X-axis galvanometer and the deflection angle of the Y-axis galvanometer, and the present disclosure is more intelligent and convenient by adopting a mode of adjusting the collimating lens and adjusting angles of the galvanometers; then the height calibration is performed, and the axial movement system of the cutting machine is controlled to make the laser cutting head rise to a preset height after touching the to-be-cut sheet and then descends again, rise to a limited height of the laser cutting head after touching the sheet for the second time, and at this time, setting of the height of the laser cutting head is completed; then the laser cutting head operates according to the preset trajectory to confirm whether the to-be-cut pattern completely falls within the sheet or not; and after the calibration ends, cutting is performed in accordance with the set spot parameters and cutting parameters.

For various sheets of different thicknesses, the cutting parameters may be set as follows:

When a stainless steel medium or thick sheet is cut, a spot trajectory diameter is 40-160 pixels, a swing frequency is 80-300 Hz, negative focus cutting is adopted, and pressure is 5-25 bar when a cutting auxiliary gas is nitrogen or air. Compared with a laser cutting process that the cutting parameters are same but the spot is non-adjustable, this method can increase the cutting speed of the stainless steel medium or thick sheet by 30%-80%.

When carbon steel medium and thick sheets are cut, a spot trajectory diameter is 10-80 pixels, a swing frequency is 100-200 Hz, positive focus cutting is adopted, and pressure is 0.4-2.8 bar when a cutting auxiliary gas is oxygen. Compared with a laser cutting process that the cutting parameters are same but the spot is non-adjustable, this method can increase the cutting speed by 10%-45% when the carbon steel medium and thick sheets are cut.

When a copper or aluminum medium or thick sheet is cut, a spot trajectory diameter is 40-90 pixels, a swing frequency is 100-300 Hz, negative focus cutting is adopted, and the pressure is 5-25 bar when a cutting auxiliary gas is nitrogen or air. Compared with a laser cutting process that the cutting parameters are same but the spot is non-adjustable, this cutting process can increase the cutting speed by 20%-300%.

In addition, for the stainless steel thin sheet, the carbon steel thin and medium sheets, the copper or aluminum thin sheet, a spot trajectory adjustable function can be selectively enabled or disabled according to the cutting needs.

Since the spot does the continuous minor movement, the actual output beam is at a certain angle to a vertical direction, the slit becomes larger correspondingly, and the sheet molten pool becomes larger, which is beneficial to outflow of a sheet melt, so that the possibility of hole blasting during the cutting process is greatly lowered; moreover, a focus position of the beam in the cutting process is also lowered correspondingly, which guarantees the uniformity of laser energy in the sheet, so that the cutting speed is faster, and the increase of the cut sheet molten pool provides a good condition for cutting a thicker sheet, and in addition, the value of the cutting gas pressure decreases in comparison with that of the cutting gas pressure when the spot trajectory is non-adjustable, and therefore, this method can weaken the cooling effect of the cutting gas and improve the heat utilization rate of the laser cutting in the case of accelerating discharge of the molten metal.

Four processing cases are given below to illustrate the beneficial effects of the present application:

| Processing case | Cut material | Spot diameter (pixel) | Swing frequency (Hz) | Focus | Cutting gas pressure (bar) | Cutting speed (m/min) |
|---|---|---|---|---|---|---|
| Case 1 | 16 mm stainless steel sheet | 60 | 110 | Negative focus | 22 | 1.6 |
| Case 2 | 12 mm copper sheet | 45 | 135 | Negative focus | 20 | 2.1 |
| Case 3 | 12 mm carbon steel sheet | 45 | 135 | Positive focus | 1.5 | 2.5 |

Wherein the above examples are the specific processing cases where the spot trajectory is set to be circular, so as to assist in explaining the beneficial effects of this solution.

The laser cutting head of the present application can be selected according to actual cutting requirements. If the galvanometers are driven to rotate without starting the motor, the spot adjustable function is not enabled.

It can be seen from the above implementations that the present application has the beneficial effects that the spot trajectory shape can be changed by controlling the X-axis galvanometer and the Y-axis galvanometer, and the spot does the cyclic reciprocating movement in the horizontal plane, which greatly increases a cuttable sheet thickness and cutting speed, so that a laser device of existing power can achieve a cutting effect and speed of a higher-power device, and production and purchase costs are reduced; the laser cutting head has a heat dissipation function, which guarantees long-term operation of the laser cutting head; the laser cutting head is provided with protective lenses, which prevents damage and contamination to the interior of the laser cutting head; a modular design is adopted as a whole, and the trajectory control assembly has various usage forms, which is convenient for assembly and use; and a faster cutting speed can be obtained using the cutting process provided in the present application, and the cuttable sheet thickness is greater at same power.

The foregoing description of the disclosed embodiments enables those skilled in the art to implement or use the present application. Various modifications to these embodiments will be obvious to those skilled in the art, and the general principles defined herein can be implemented in other embodiments without departing from the spirit or scope of the present application. Therefore, the present application will not be limited to these embodiments shown herein, but should conform to the widest scope consistent with the principles and novel features disclosed herein.

## Claims

1. A laser cutting head having a variable spot trajectory shape, comprising a beam shaper (4), a trajectory control assembly, a focusing assembly and a nozzle that are successively arranged in an optical path direction, wherein the trajectory control assembly comprises an X-axis galvanometer (705-1) and a Y-axis galvanometer (705-2), a rotation axis of the X-axis galvanometer (705-1) is a vertical axis, a rotation axis of the Y-axis galvanometer (705-2) is a horizontal axis, and a reflection surface of the Y-axis galvanometer (705-2) is opposite to a reflection surface of the X-axis galvanometer (705-1).

2. The laser cutting head having a variable spot trajectory shape according to claim 1, wherein the trajectory control assembly comprises a mounting base (10), an X-axis galvanometer assembly (7-1) and a Y-axis galvanometer assembly (7-2) are mounted on the mounting base (10), the X-axis galvanometer assembly (7-1) comprises an X-axis motor (708-1), the X-axis galvanometer (705-1) is mounted on an output shaft of the X-axis motor (708-1), and the X-axis galvanometer (705-1) is located inside the mounting base (10); the Y-axis galvanometer assembly (7-2)) comprises a Y-axis motor (708-2), the Y-axis galvanometer (705-2) is mounted on an output shaft of the Y-axis motor (708-2), and the Y-axis galvanometer (705-2) is located inside the mounting base (10).

3. The laser cutting head having a variable spot trajectory shape according to claim 2, wherein the trajectory control assembly further comprises a reflecting lens (6), the reflecting lens (6) is located in front of the X-axis galvanometer (705-1) and the Y-axis galvanometer (705-2) is located behind the X-axis galvanometer (705-1) in the optical path direction, and the reflecting lens is mounted in the mounting base.

4. The laser cutting head having a variable spot trajectory shape according to claim 2, wherein the trajectory control assembly further comprises a reflecting lens (6), and in the optical path direction, the Y-axis galvanometer (705-2) is located in front of the X-axis galvanometer (705-1), and the reflecting lens (6) is located behind the X-axis galvanometer (705-1).

5. The laser cutting head having a variable spot trajectory shape according to claim 2, wherein the beam shaper (4) is arranged horizontally, and in the optical path direction, the Y-axis galvanometer (705-2) is located behind the X-axis galvanometer (705-1).

6. The laser cutting head having a variable spot trajectory shape according to any one of claims 2-5, wherein the X-axis galvanometer assembly (7-1) and the Y-axis galvanometer assembly (7-2) each further comprise a galvanometer cooling assembly, the galvanometer cooling assembly comprises a galvanometer cooling plate (24), an obverse side of the galvanometer cooling plate (24) is close to a reverse side of the reflection surface of the X-axis galvanometer (705-1) or the Y-axis galvanometer (705-2), a cooling water tank (25) is arranged on the galvanometer cooling plate (24), and a distance between the galvanometer cooling plate (24) and the X-axis galvanometer (705-1) or the Y-axis galvanometer (705-2) is 2-10 mm.

7. The laser cutting head having a variable spot trajectory shape according to any one of claims 1-5, wherein a limiting plate (704) is arranged in front of or behind the reflection surface of the X-axis galvanometer (705-1), a limiting plate (704) is arranged in front of or behind the reflection surface of the Y-axis galvanometer (705-2), when the X-axis galvanometer (705-1) rotates to preset positions on two sides, the X-axis galvanometer (705-1) is in contact with two side edges of the limiting plate (704); and when the Y-axis galvanometer (705-2) rotates to set positions on two sides, the Y-axis galvanometer (705-2) is in contact with two side edges of the limiting plate (704).

8. The laser cutting head having a variable spot trajectory shape according to claim 7, wherein a distance between the limiting plate (704) and the X-axis galvanometer (705-1) or the Y-axis galvanometer (705-2) is m, m is equal to kl, k is a set coefficient, l is a length of the X-axis galvanometer or the Y-axis galvanometer, and m is 0.5-13.5 mm.

9. The laser cutting head having a variable spot trajectory shape according to any one of claims 1-5, wherein the beam shaper (4) comprises a beam filtering assembly and a collimating lens assembly, and in the optical path direction, the beam filtering assembly is located in front of the collimating lens assembly; a beam passing hole is arranged in the middle of the beam filtering assembly, a tapered beam absorption surface is arranged above the beam passing hole, and a cone angle from a laser exit point of a laser device to the beam passing hole is greater than or equal to a beam divergence angle of the laser device.

10. The laser cutting head having a variable spot trajectory shape according to claim 9, wherein the collimating lens assembly comprises a collimating lens housing (12) and a collimating lens (11), and a coaxiality adjusting part is mounted on the collimating lens housing (12) to guarantee the coaxiality of an output laser beam and the nozzle.

11. The laser cutting head having a variable spot trajectory shape according to any one of claims 1-5, wherein the focusing assembly comprises a focusing lens (15), a focusing protective lens and a lifting mechanism (3), the focusing lens (15) is mounted in a lens barrel (22), a compression spring (23) is arranged on the focusing lens (15), and is configured to compress the focusing lens (15), the lifting mechanism comprises a lifting motor (17), a lead screw (18) is arranged on an output shaft of the lifting motor (17), a lens assembly mounting base (19) is mounted on the lead screw (18) in a fit manner, the lead screw (18) can drive the lens assembly mounting base (19) to move along the lead screw (18), the lens barrel is mounted on the lens assembly mounting base (19), a lower end of the focus protective lens is provided with a lower protective lens (8), and a nozzle and a cutting gas passage are arranged at a lower part of the focusing assembly.

12. The laser cutting head having a variable spot trajectory shape according to claim 11, wherein a zoom ratio of the focusing assembly to the beam shaper is 1.2-3.5.

13. A cutting process, comprising steps as follows:
S1. determining parameters of a to-be-cut sheet;
S2. setting spot parameters, wherein the spot parameters comprise a spot trajectory pattern, a spot radius, and a swing frequency or swing speed;
S3. setting cutting parameters, wherein the cutting parameters comprise a cutting pattern, a cutting height, a cutting focus, cutting speed and cutting gas pressure;
S4. performing calibration, wherein calibration comprises coaxiality adjustment, height calibration and cutting range calibration;
S5. cutting the sheet, wherein in a cutting process, a laser cutting head performs cutting according to the set cutting parameters, and meanwhile an X-axis galvanometer and a Y-axis galvanometer cooperate with the spot parameters to make a spot do continuous minor movement; and
S6. completing cutting.

14. The cutting process according to claim 13, wherein:
in S1, material options and thickness options are preset by a host computer; and
in S2, the spot trajectory pattern comprises one or more selected from an "8" shape, a horseshoe shape, a "∞" shape, and an ellipse shape.

15. The cutting process according to claim 14, wherein the spot parameters and the cutting parameters comprise at least one of the parameters as follows:
when a stainless steel medium or thick sheet is cut, a spot trajectory diameter is 40-160 pixels, a swing frequency is 80-300 Hz, negative focus cutting is adopted, a cutting auxiliary gas is nitrogen or air, and a gas pressure is 5-25 bar;
when a carbon steel medium or thick sheet is cut, a spot trajectory diameter is 10-80 pixels, a swing frequency is 100-200 Hz, positive focus cutting is adopted, a cutting auxiliary gas is oxygen, and a gas pressure is 0.4-2.8 bar; and
when a copper or aluminum medium or thick sheet is cut, a spot trajectory diameter is 40-90 pixels, a swing frequency is 100-300 Hz, negative focus cutting is adopted, a cutting auxiliary gas is nitrogen or air, and a gas pressure is 5-25 bar.

16. The cutting process according to any one of claims 13-15, wherein in S4:
coaxiality adjustment comprises: determining the alignability of an input beam by adjusting the position of a collimating lens (11) through a coaxiality adjustment part and/or determining the coaxiality of an output beam and a nozzle by adjusting a deflection angle of an X-axis galvanometer and a deflection angle of a Y-axis galvanometer;
height calibration comprises: controlling an axial movement system of a cutting machine to make a laser cutting head rise to a preset height after touching the to-be-cut sheet for the first time and then descend again, and then rise to a limited height of the laser cutting head after touching the sheet again; and
cutting range calibration comprises: enabling the laser cutting head to emit a guide laser, and enabling the laser cutting head to operate along a preset cutting pattern trajectory to confirm whether a to-be-cut pattern completely falls within the sheet or not.
